# EUROPÄISCHE PATENTANMELDUNG

(11) **EP 2 295 270 A2**
(43) Veröffentlichungstag der Anmeldung: **16.03.2011**
(21) Anmeldenummer: 10173959.7
(22) Anmeldetag: 25.08.2010
(51) Int. Cl.: B60G 13/00, B60G 15/06

(54) **Lagerung für einen Schwingungsdämpfer**

(30) Priorität: 09.09.2009 DE 102009029302
(71) Anmelder: ZF Friedrichshafen AG, 88038 Friedrichshafen (DE)
(72) Erfinder: Marquar, Hendrik, 97422, Schweinfurt (DE); Schuler, Manfred, 97456, Dittelbrunn (DE); Renn, Josef, 97337, Dettelbach (DE); Stretz, Klaus, 97437, Haßfurt (DE); Sundermann, Karin, 97526, Sennfeld (DE); Zutzmann, Michael, 97424, Schweinfurt (DE)

(57) **Zusammenfassung**

Lagerung (1) für einen Schwingungsdämpfer, umfassend ein äußeres Gehäuse (3), in dem ein Elastomerkern (9) an mindestens einer Deckseite (13;15) über partielle Kontaktflächen verspannt ist, wobei der Elastomerkern mit einer Kolbenstange des Schwingungsdämpfers in Wirkverbindung steht, mit mindestens einer einrastbaren Formschlussverbindung (21,27,29), die das Gehäuse an einem Fahrzeug hält. An mindestens einer Deckseite (13) des Elastomerkerns ist eine Profilscheibe (17) beigefügt, die die Kontaktfläche zum Elastomerkern aufweist, wobei die Profilscheibe auf einer dem Elastomerkern abgewandten Seite ein Formschlusselement (21) aufweist, das das Gehäuse der Lagerung durchdringt und die Formschlussverbindung (21,27,29) mit dem Fahrzeug bildet.

## Beschreibung

Die Erfindung betrifft eine Lagerung für einen Schwingungsdämpfer gemäß dem Oberbegriff von Patentanspruch 1.

Aus der DE 199 41 558 A1 ist ein Federbeinstützlager bekannt, das ein äußeres Gehäuse aufweist, in dem ein ringförmiger Elastomerkern eingespannt ist. Der Elastomerkern umgreift axial eine Tragscheibe, die an einer Kolbenstange des Federbeins befestigt ist. Um eine gezielte Federkraftkennlinie zu erreichen, weist der Elastomerkern in Richtung der Gehäuseunter- und Oberseite eine Profilierung auf. Diese Profilierung bringt bei einer geringfügigen Relativbewegung der Tragscheibe zum Gehäuse zunehmend mehr Elastomeranteile in Eingriff, so dass die Federrate ausgeprägt progressiv steigt.

Zur einfachen, d. h. schraubenlose Montage, kann das Oberteil des Gehäuses durch eine Öffnung in der Karosserie geschoben werden, bis eine Anschlagposition erreicht ist. Diese vorbestimmte Einbaulage wird durch einen zweigeteilten Sicherungsring fixiert, der in eine Nut des Oberteils eingreift. Mit seinem äußeren Randbereich liegt der Sicherungsring auf der Karosserieoberseite auf.

Diese Bauweise eines Federbeinstützlagers weist zwei Nachteile auf. Zum einen gestaltet sich die Montage eines Schwingungsdämpfers mit dem Lager in einer Werkstatt schwierig, da der Schwingungsdämpfer im Radkasten eingeführt werden muss und der zweiteilige Sicherungsring in die Haltenut des Lagers eingeklemmt werden muss. Des Weiteren unterliegen die profilierten Deckseiten des Elastomerkerns einem gewissen Verschleiß, der nur durch entsprechende Werkstoffe beherrschbar ist.

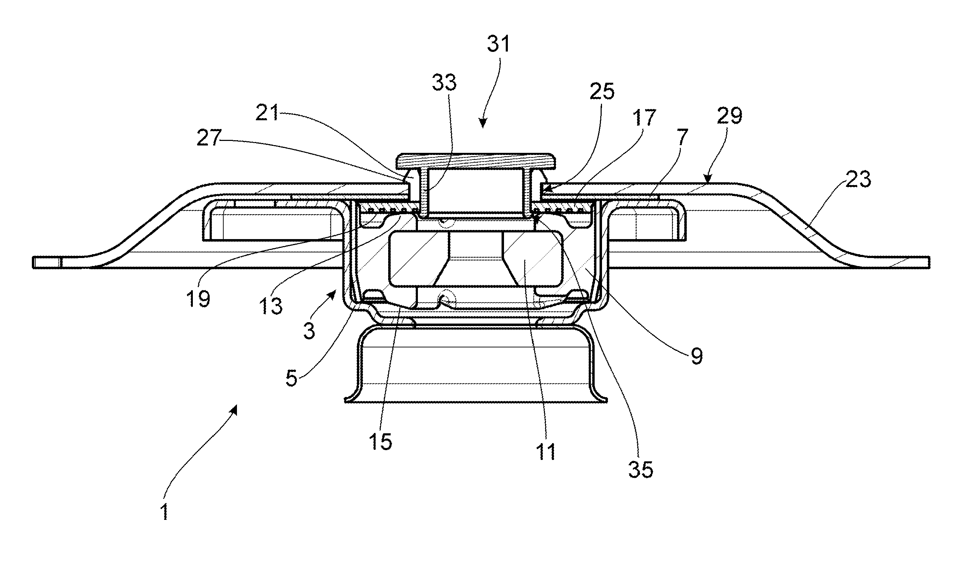

Die DE 10 2004 039 734 A1 zeigt in der Fig. 9 elastische Haltearme als Teil eines Federbeinstützlagers. Die elastischen Haltearme greifen in den Karosseriedom ein und halten das Federbeinstützlager in einer Montagezwischenstellung, bis zusätzliche Schrauben das Federbeinstützlager in der Montageendstellung fixieren.

Die Aufgabe der vorliegenden Erfindung besteht darin, eine Lagerung für einen Schwingungsdämpfer derart weiterzuentwickeln, dass einerseits eine sehr einfache Montage möglich ist und anderseits die Lagerung sehr einfach einer gewünschten Kennlinie anpassbar ist.

Erfindungsgemäß wird die Aufgabe dadurch gelöst, dass mindestens einer Deckseite des Elastomerkerns eine Profilscheibe beigefügt ist, die die Kontaktfläche zum Elastomerkern aufweist, wobei die Profilscheibe auf einer dem Elastomerkern abgewandten Seite ein Formschlusselement aufweist, das das Gehäuse der Lagerung durchdringt und die Formschlussverbindung mit dem Fahrzeug bildet.

Die Profilscheibe übernimmt damit eine Doppelfunktioin. Zum einen dient sie der Anbindung an das Fahrzeug und zum anderen kann man einen Elastomerkern mit einer glatten Deckseite verwenden, der eine deutlich bessere Dauerhaltbarkeit aufweist. Man kann einen Standard-Elastomerkern verwenden, der über die Profilscheibe für eine bestimmte Federkraftkennlinie ausgerichtet wird.

Die Profilscheibe besteht aus Kunststoff, so dass auch komplizierte Oberflächenstrukturen, die die Kontaktfläche zum Elastomerkern bestimmen, leicht möglich sind.

Die Anbindung des Lagerelements an das Fahrzeug gestaltet sich sehr einfach, in dem mehrerer Formschlusselemente eine gemeinsame Durchgangsöffnung des Fahrzeug durchgreifen. Grundsätzlich kann man für jedes Formschlusselement eine separate Durchgangsöffnung vorsehen. Der Vorteil besteht darin, dass man eine orientierte Ausrichtung des Lagerelements im Fahrzeug erreicht, beispielsweise um richtungsabhängige Federkräfte im Lagerelement ausnutzen zu können. Man muss dann bei der Montage aber mehr Aufwand in die Ausrichtung des Lagerelements zur Karosserie betreiben, damit die Formschlusselemente in die einzelnen Durchgangsöffnungen eingreifen können.

In weiterer Ausgestaltung der Erfindung werden die Formschlusselemente von radial beweglichen Schnapphaken gebildet, deren Halteflächen auf einer Stützfläche am Fahrzeug anliegen.

Die radiale Beweglichkeit der Schnapphaken ist durch ein Sperrelement blockierbar. Ein unbeabsichtigtes Lösen der Schnapphaken ist damit ausgeschlossen.

Das Sperrelement wird im einfachsten Fall von einer Scheibe gebildet, die mit mehreren Schnapphaken im Eingriff steht. Wenn mehrere Schnapphaken auf einem Teilkreis angeordnet sind, dann platziert man die Scheibe einfach derart, dass ein Scheibenrand der Lösebewegung entgegengerichtet ist.

Bei einer bevorzugten Ausführungsform ist die Scheibe als Schließdeckel für die Durchgangsöffnung ausgeführt. Diese Variante bietet den Vorteil, dass über die Scheibe eine Geräuschisolierung zum Fahrzeuginnenraum erreicht wird. Des Weiteren werden mit der Schließdeckelfunktion die Schnapphaken abgedeckt, so dass bei einem Unfall, bei dem eine Person auf eine Karosseriehaube fällt, die Verletzungsgefahr durch hervorstehende Bauteile, die sich durch die Haube bohren könnten, vermindert wird.

Zusätzlich kann man vorsehen, dass die Scheibe mit einem axialen Fortsatz in das Gehäuseinnere eingreift und axial fixiert ist. Ein Losrütteln im Fahrzeugbetrieb wird dadurch wirksam verhindert.

Um insgesamt ein stabiles Bauteil zu erreichen, ist der axiale Fortsatz an der Scheibe zylindrisch ausgeführt, beispielsweise in Form einer Hülse. Vorteilhafterweise ist die Fixierung über einen Formschluss mit der Profilscheibe ausgeführt.

Anhand der folgenden Figurenbeschreibung soll die Erfindung näher erläutert werden.

Die einzige Figur zeigt eine Schnittdarstellung durch ein Lagerelement 1 für einen nicht dargestellten Schwingungsdämpfer in einem Fahrzeugfahrwerk. Das Lagerelement 1 umfasst ein äußeres Gehäuse 3, das aus einem topfförmigen Gehäuseunterteil 5 und einem scheibenförmigen Gehäuseoberteil 7 besteht. In dem Gehäuse 3 ist ein Elastomerkern 9 angeordnet, der über eine Einlegescheibe 11 mit einer nicht dargestellten Kolbenstange des besagten Schwingungsdämpfers in Wirkverbindung steht. Der Elastomerkern 9 ist über seine beiden Deckseiten 13; 15 im Gehäuse 3 axial verspannt.

Zwischen der oberen Deckseite 13 und dem Gehäuseoberteil 7 ist eine Profilscheibe 17 angeordnet. In diesem Ausführungsbeispiel verfügt die Profilscheibe 17 über eine Mehrzahl von konzentrischen Ringstegen 19, die auf der ebenen Deckseite 13 des Elastomerkerns 9 zumindest teilweise anliegen. Dadurch bilden sich Ringräume, in denen bei einer Axialbelastung des Elastomerkerns 9 in Richtung der Gehäuseoberseite 7 Elastomervolumen verdrängt werden kann, um die Federrate des Elastomerkerns progressiv zu gestalten.

Auf der dem Elastomerkern 9 abgewandten Seite der Profilscheibe sind mehrere Formschlusselemente 21 in Form von radial elastischen Schnapphaken angeordnet, die das Gehäuse 3 der Lagerung 1 durchdringen. Diese Schnapphaken sind einteilig mit der aus Kunststoff bestehenden Profilscheibe 17 ausgeführt. Das Fahrzeug, von dem ein Ausschnitt aus einer Karosserie 23 dargestellt ist, weist eine Durchgangsöffnung 25 auf, durch die alle Schnapphaken greifen und mit ihren Halteflächen 27 auf einer Stützfläche 29 der Karosserie 23 anliegen.

Bei der Montage wird das Lagerelement 1, an dem der Schwingungsdämpfer befestigt ist, in die Durchgangsöffnung 25 der Karosserie 23 geschoben. Wenn das Gehäuseoberteil 7 an der Karosserie 23 anliegt, dann kommen die Halteflächen 27 der Formschlusselemente 21 an der Stützfläche 29 der Karosserie in Eingriff. In dieser Montagestufe ist die volle Kraftübertragung des Schwingungsdämpfers zum Fahrzeug gewährleistet.

Um das Lagerelement 1 gegen ungewolltes Lösen zu sichern, werden die Schnapphaken 21 durch ein Sperrelement 31 blockiert, das zentral innerhalb der Schnapphaken 21 eingelegt wird. In der einfachsten Form genügt als Sperrelement eine einfache Scheibe, die gegen die Lösebewegung der Schnapphaken ausgerichtet ist. Dadurch steht die Scheibe mit mehreren Schnapphaken im Eingriff.

In der dargestellten Form verfügt die Scheibe 31 über einen axialen zylindrischen Fortsatz 33 in der Bauform einer Hülse, die in das Gehäuseinnere eingreift und das Sperrelement axial fixiert. Am unteren Ende weist die Hülse 33 mindestens eine Erweiterung 35 ihres Außendurchmessers auf, so dass ein Formschluss mit der zum Elastomerkern nach radial innen überstehenden Profilscheibe 17 ausgeführt werden kann. Die Scheibe 31 deckt die Durchgangsöffnung in der Karosserie 23 vollständig ab.

### Bezugszeichenliste

- 1: Lagerelement
- 3: Gehäuse
- 5: Gehäuseunterteil
- 7: Gehäuseoberteil
- 9: Elastomerkern
- 11: Einlegescheibe
- 13; 15: Deckseite
- 17: Profilscheibe
- 19: Ringstege
- 21: Formschlusselement
- 23: Karosserie
- 25: Durchgangsöffnung
- 27: Haltefläche
- 29: Stützfläche
- 31: Sperrelement
- 33: Fortsatz
- 35: Erweiterung des Außendurchmessers am Fortsatz

## Patentansprüche

1. Lagerung (1) für einen Schwingungsdämpfer, umfassend ein äußeres Gehäuse (3), in dem ein Elastomerkern (9) an mindestens einer Deckseite (13; 15) über partielle Kontaktflächen verspannt ist, wobei der Elastomerkern (9) mit einer Kolbenstange des Schwingungsdämpfers in Wirkverbindung steht, mit mindestens einer einrastbaren Formschlussverbindung (21; 27; 29), die das Gehäuse (3) an einem Fahrzeug hält,
**dadurch gekennzeichnet,**
**dass** mindestens einer Deckseite (13) des Elastomerkerns (9) eine Profilscheibe (17) beigefügt ist, die die Kontaktfläche zum Elastomerkern (9) aufweist, wobei die Profilscheibe (9) auf einer dem Elastomerkern (9) abgewandten Seite ein Formschlusselement (21) aufweist, das das Gehäuse (3) der Lagerung (1) durchdringt und die Formschlussverbindung (21; 27; 29) mit dem Fahrzeug bildet.

2. Lagerung nach Anspruch 1,
**dadurch gekennzeichnet,**
**dass** die Profilscheibe (17) aus Kunststoff besteht.

3. Lagerung nach Anspruch 1,
**dadurch gekennzeichnet,**
**dass** mehrerer Formschlusselemente (21) eine gemeinsame Durchgangsöffnung (25) des Fahrzeug durchgreifen.

4. Lagerung nach Anspruch 1,
**dadurch gekennzeichnet,**
**dass** die Formschlusselemente (21) von radial beweglichen Schnapphaken gebildet werden, deren Halteflächen (27) auf einer Stützfläche (29) am Fahrzeug anliegen.

5. Lagerung nach Anspruch 4,
**dadurch gekennzeichnet,**
**dass** das die radiale Beweglichkeit der Schnapphaken (21) durch ein Sperrelement (31) blockierbar ist.

6. Lagerung nach Anspruch 5,
**dadurch gekennzeichnet,**
**dass** das Sperrelement (31) von einer Scheibe gebildet wird, die mit mehreren Schnapphaken (21) im Eingriff steht.

7. Lagerung nach Anspruch 6,
**dadurch gekennzeichnet,**
**dass** die Scheibe (31) als Schließdeckel für die Durchgangsöffnung (25) ausgeführt ist.

8. Lagerung nach Anspruch 6,
**dadurch gekennzeichnet,**
**dass** die Scheibe (31) mit einem axialen Fortsatz (33) in das Gehäuseinnere eingreift und axial fixiert ist.

9. Lagerung nach Anspruch 8,
**dadurch gekennzeichnet,**
**dass** der axiale Fortsatz (33) zylindrisch ausgeführt.

10. Lagerung nach Anspruch 8,
**dadurch gekennzeichnet,**
**dass** die Fixierung über einen Formschluss (35) mit der Profilscheibe ausgeführt ist.
